## Europäisches Patentamt

(19) **European Patent Office**

**Office européen des brevets**

(11) Veröffentlichungsnummer: **0 110 464**
**B1**

(12) # EUROPÄISCHE PATENTSCHRIFT

(45) Veröffentlichungstag der Patentschrift:
**11.03.87**

(51) Int. Cl.⁴: **H 04 L 11/16,** H 04 M 9/02,
H 04 Q 11/04

(21) Anmeldenummer: **83201628.1**

(22) Anmeldetag: **15.11.83**

(54) **Nebenstellenanlage.**

(30) Priorität: **20.11.82 DE 3242958**

(43) Veröffentlichungstag der Anmeldung:
**13.06.84 Patentblatt 84/24**

(45) Bekanntmachung des Hinweises auf die Patenterteilung:
**11.03.87 Patentblatt 87/11**

(84) Benannte Vertragsstaaten:
**DE FR GB SE**

(56) Entgegenhaltungen:
**EP - A - 0 017 835**

**2ND INTERNATIONAL SYMPOSIUM ON SUBSCRIBER LOOPS AND SERVICES, 3-7. Mai 1976, LONDON (GB). D. BUDD et al.: "A digital network compatible subsriber carrier system", Seiten 143-147**

(73) Patentinhaber: **Philips Kommunikations Industrie AG, Thurn-und-Taxis-Strasse 10, D-8500 Nürnberg 10 (DE)**
(84) Benannte Vertragsstaaten: **DE**

(73) Patentinhaber: **N.V. Philips' Gloeilampenfabrieken, Groenewoudseweg 1, NL-5621 BA Eindhoven (NL)**
(84) Benannte Vertragsstaaten: **FR GB SE**

(72) Erfinder: **Kammerer, Walter, Dipl.-Ing., Wilhelmshavener Strasse 39, D-8500 Nürnberg (DE)**
Erfinder: **Spiro, Vladimir, Dipl.-Ing., Fürther Strasse 4, D-8501 Eckental (DE)**

(74) Vertreter: **Peuckert, Hermann et al, Philips Patentverwaltung GmbH Billstrasse 80 Postfach 10 51 49, D-2000 Hamburg 28 (DE)**

ACTORUM AG

## Beschreibung

Die Erfindung betrifft eine zentral gesteuerte Fernmelde-, insbesondere Nebenstellenanlage mit einer Vielzahl von Teilnehmerendeinrichtungen und mit gerichteten Datenleitungen, an welche alle Teilnehmerendeinrichtungen parallel angeschlossen sind und über welche Datenblöcke seriell übertragen werden.

Aus WO 80/00883 ist ein nach dem Zeitmultiplexprinzip gesteuertes Datensystem bekannt. Dieses Datensystem enthält eine Vielzahl von Datenverarbeitungseinheiten, welche an eine zentrale Steuerung angeschlossen sind. Die Datenverarbeitungseinheiten weisen jeweils einen Sender und einen Empfänger auf. Sender und Empfänger sind jeweils an eine einzige Busleitung angeschlossen. In jede dieser Busleitungen sind Verstärker einfügbar (gerichtete Datenleitung). Dadurch können sehr lange Busleitungen verwendet werden.

Auf der einen Busleitung werden Datenblöcke von einer sendenden Datenverarbeitungseinheit zur zentralen Steuerung seriell übertragen. Nach Bearbeitung in der zentralen Steuerung wird die, zwischen den Datenverarbeitungseinheiten auszutauschende, Information über die zweite Busleitung zur adressierten Datenverarbeitungseinheit, in Form von seriellen Datenblöcken, übertragen.

Bei diesem Datensystem (WO 80/00883 = P 2 953 239.6) werden Steuersignale und Information (Daten) gemeinsam auf einer Busleitung übertragen. Die geschlossene Schleife zwischen zwei Informationen austauschenden Datenverarbeitungseinheiten ist stets über die zentrale Steuerung geführt. Bei der Vorgabe der Zeitbedingungen für die Steuerung müssen das Auftreten grosser Zeitverzögerungen durch lange Busleitungen und eine Reaktionszeit, bedingt durch einen festen Befehlsablauf in der zentralen Steuerung, berücksichtigt werden. Diese fest vorgegebene, unveränderliche Gesamtverzögerungszeit und die dadurch bedingte Totzeit verringert die Auslastung des durch die beiden Busleitungen gebildeten Duplex-Übertragungskanals und macht ein unverzögertes Weitergeben von Information unmöglich.

Werden in Teilnehmerendeinrichtungen beispielsweise analoge Sprachsignale (Information) in digitale Signale umgesetzt und diese in einem solchen Datensystem übertragen, so kann die durch die Bearbeitung bedingte Verzögerung gross werden. Sie kann sich dann als Echo, d.h. als Störgeräusch, bemerkbar machen. Weiterhin ist von Nachteil, dass bei Ausfall der zentralen Steuerung bzw. bei Unterbrechung in einer der beiden Busleitungen keine Kommunikation zwischen den Datenverarbeitungseinheiten mehr möglich ist. Diese Störung hat den Ausfall des gesamten Datensystems zur Folge. Die Wahrscheinlichkeit, mit der dieses Ergebnis eintritt, nennt man Ausfallwahrscheinlichkeit.

Der Erfindung liegt die Aufgabe zugrunde, mit geringem Aufwand eine Nebenstellenanlage für Daten- und/oder Fernsprechkommunikation mit geringer Ausfallwahrscheinlichkeit zu schaffen.

Diese Aufgabe wird erfindungsgemäss durch die kennzeichnenden Merkmale des Anspruchs 1 gelöst.

Im Vielfachzugriffsverfahren, d.h. unabhängig voneinander, können die Teilnehmerendeinrichtungen auf eine Vielzahl von Datenleitungen der Empfangs- und Senderichtung in einem festen Zeitmultiplexrahmen zugreifen. Teilnehmerendeinrichtungen senden zu dem ihnen von einer Zentrale zugeteilten Zeitschlitz auf der ihnen zugeteilten Datenleitung der Senderichtung.

Wegen der Auftrennung der Datenleitungen in Sende- und Empfangsrichtung können preisgünstige Verstärker verwendet werden. Gerichtete Datenleitungen in Senderichtung gehen an deren Ende unmittelbar in die Datenleitungen in Empfangsrichtung über, d.h. ohne zeitliche Verzögerung der Information. Damit ist die für Fernsprechvermittlung erforderliche Zeitbedingung (sonst Störgeräusche z.B. Echo) eingehalten.

Soll eine Erweiterung der Nebenstellenanlage vorgenommen werden, so ist damit eine einfach zugängliche Stelle gegeben, an welcher, nach Auftrennung der Schleifen, Verbindungen zu einer weiteren Nebenstellenanlage herstellbar sind oder eine Verlängerung der gerichteten Leitungen für Daten und Takte möglich ist.

Eine Verbindung zwischen zwei Teilnehmern benutzt immer nur eine der Vielzahl von Datenleitungen der Empfangs- und Senderichtung. Dadurch weist, gemäss der Erfindung, die Nebenstellenanlage die Vorteile auf, dass bei Ausfall einer Datenleitung in Sende- und Empfangsrichtung, z.B. durch Leiterunterbrechung, bestehende Verbindungen auf anderen Leitungen nicht gestört werden, dass auf den ungestörten Leitungen weiterhin neue Verbindungen aufgebaut werden können und dass eine bestehende Verbindung aufrecht erhalten werden kann, indem diese auf eine intakte Datenleitung der Sende- und Empfangsrichtung gelegt wird. Wird anstatt der seriellen Datenübertragung eine parallele Datenübertragung vorgenommen so führt der Ausfall einer Datenleitung zu einem Totalausfall der Anlage. Alle bestehenden Verbindungen werden unterbrochen und es können auch keine neuen aufgebaut werden.

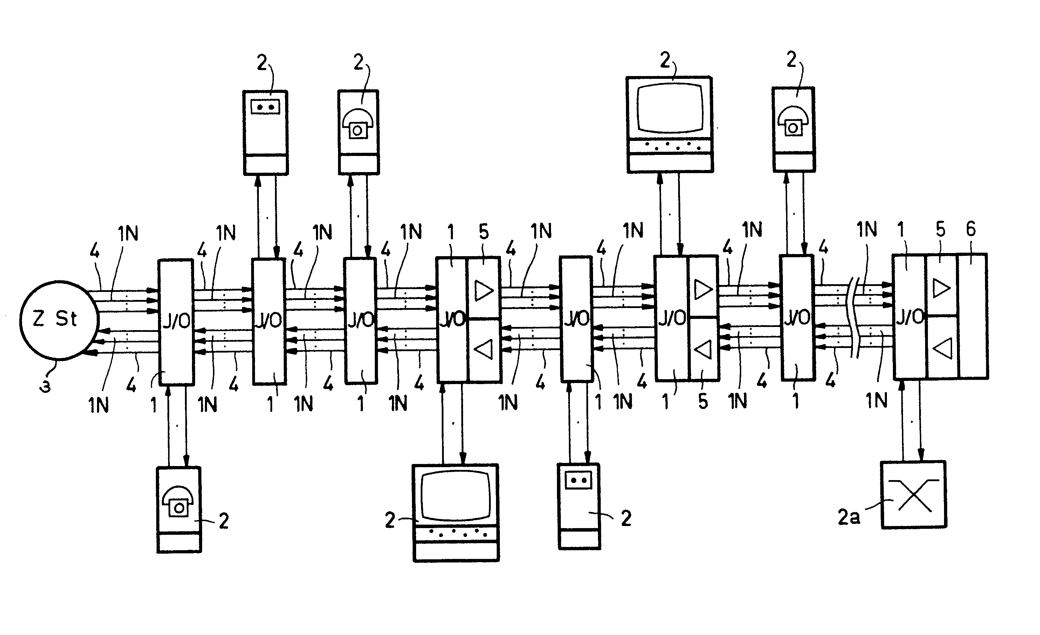

Aus dem Artikel von D. Budd et al.: «A digital network compatible subscriber carrier system», Seiten 143–147, insbesondere aus der Figur 1, ist es an sich bekannt, eine Vielzahl von parallel geführten gerichteten Datenleitungen vorzusehen, auf welche jede Endeinrichtung zugreifen kann, wobei die gerichteten Datenleitungen paarweise zu einer Schleife verbunden sind. Hierbei wird aber beim Ausfall einer der Leitungen der Übertragungsstrecke als Ersatzleitung bestimmt und auf diese umgeschaltet. Es findet keine Verteilung der Zeitkanäle der ausgefallenen Datenleitung auf die übrigen parallel geführten Datenleitungen statt.

Gemäss einer vorteilhaften Ausgestaltung der Erfindung überträgt die zentrale Steuereinrichtung über mindestens je eine gerichtete Leitung einen Bittakt und einen Rahmentakt zur Teilnehmerendeinrichtung.

Infolge der Verwendung von getrennten Leitungen zur Übertragung von Steuerinformation von denen, welche zur eigentlichen Übertragung der Information verwendet werden, wirkt sich der Ausfall von Datenleitungen nicht auf den Steuerablauf aus.

Vorteilhafte Ausgestaltungen der Erfindung sind in den Unteransprüchen gekennzeichnet.

Das erfindungsgemässe Verfahren wird nachfolgend anhand des in der Zeichnung dargestellten Ausführungsbeispiels näher beschrieben und erläutert.

Das gewählte Ausführungsbeispiel bezieht sich auf eine Vermittlungsanlage bei der das analoge Sprachsignal in ein digitales Signal umgewandelt wird.

In der Nebenstellenanlage sind Teilnehmerendeinrichtungen 2 an eine zentrale Steuereinrichtung 3 angeschlossen. Das Teilnehmeranschlussystem ist charakterisiert durch eine Linienstruktur, d.h. durch die gesamte Nebenstellenanlage läuft ein einziger, alle Informationen tragender Bus, auf dem alle Teilnehmerendeinrichtungen 2 senden und empfangen. Dieser Bus umfasst beispielsweise eine Vielzahl von parallel geführten Datenleitungen 1N, gerichtete Leitungen 4 zur Übertragung von Bittakt, Rahmentakt und weitere gerichtete Leitungen z.B. zur Übertragung der Signalisierung. Die Nebenstellenanlage ist sowohl für Sprach-, Daten- und Textvermittlung verwendbar.

Ist ein Bus durch die gesamte Nebenstellenanlage verlegt, so sind Verstärker erforderlich die die angeschlossenen Empfänger treiben können. Vorzugsweise werden gerichtete Verstärker 5 verwendet, wobei der Bus in Leitungen der Sende- und Empfangsrichtung unterteilt ist. Auf den gerichteten Datenleitungen 1N senden und empfangen alle Teilnehmerendeinrichtungen 2. Über einen Busverbinder 6 ist das Ende jeder Datenleitung 1N der Senderichtung mit dem Anfang der zugehörigen Datenleitung 1N der Empfangsrichtung verbunden. Der Bus verbindet zentrale Steuereinrichtung 3 und Teilnehmerendeinrichtung 2 in Form einer Schleife miteinander. Infolge der Verstärker 5 kann die Länge der Schleife beliebig sein. Am Ort des Busverbinders 6 ist der gesamte Informationsfluss von und zu den Teilnehmerendeinrichtungen 2 vorhanden.

An dieser Stelle kann zum Ausbau die Nebenstellenanlage durch Anschluss weiterer zentraler Steuereinrichtungen erweitert werden.

In der zentralen Steuerung 3 werden die Belegung der Zeitkanäle zentral verwaltet, sowie Bit- und Rahmentakt für die Zeitmultiplexübertragung erzeugt. Weiterhin sind Einrichtungen 1 vorgesehen, welche Schaltungsteile zum Anschluss einer oder mehrerer Teilnehmerendeinrichtungen 2 oder zum Übergang zu anderen Vermittlungseinrichtungen 2a, Schaltungsteile zum Zugriff auf Leitungen des Busses und Schaltungsteile zur Signalisierung von Verbindungswünschen zur zentralen Steuereinrichtung 3 enthalten. Jede Teilnehmerendeinrichtung 2 kann Daten in beliebige Zeitschlitze von beliebigen Datenleitungen 1N einspeisen und von dort entnehmen. Die Einrichtungen 1 können entsprechend ihrer Funktion unterschiedlich ausgebildet sein. Diese Funktionen sind z.B. Fernsprechen-Intern, Fernsprechen-Extern, Daten-Speichervermittlung, Daten-Leitungsvermittlung, Abarbeitung höherer Protokollebenen, Disk-Controller zur Speicherung von vermittelten Daten. Der Bus ist beim realisierten Ausführungsbeispiel aus folgenden Leitungen aufgebaut:

a) Einer Leitung zur Übertragung des Bittaktes von 2,048 MHz,

b) je einer Leitung zur Übertragung des Rahmentakts von 8 KHz in Sende- und Empfangsrichtung,

c) je acht Datenleitungen 1N zur Übertragung von Daten in Sende- und Empfangsrichtung mit einer Bitrate von 2,048 Mbit/s,

d) sowie je einer Leitung zur Übertragung der Signalisierung in Sende- und Empfangsrichtung mit einer Bitrate von z.B. 500 Kbit/s.

Die Daten werden in Datenblöcken von je acht bit seriell und im Zeitmultiplexverfahren übertragen, d.h. auf jeder der acht parallelen Datenleitungen 1N werden z.B. 32 Zeitkanäle zu je acht bit mit einer Bitrate von 64 Kbit/s übertragen. Weist der Informationsfluss der Teilnehmerendeinrichtung 2 eine geringere Bitrate auf, so wird der Zeitkanal mit Füllbits ergänzt. Bei höheren Bitraten werden mehrere Zeitkanäle einer Teilnehmerendeinrichtung 2 von der zentralen Steuereinrichtung 3 zugeteilt. Die gesamte Übertragungskapazität des geschilderten Ausführungsbeispiels beträgt ca. 16 Mbit/s und es können 256 Teilnehmerendeinrichtungen annähernd blockierungsfrei angeschlossen werden.

Vorzugsweise sind in allen gerichteten Leitungen, wozu die Leitungen 4 zur Übertragung des Bittakts, Rahmentakts und Signalisierung sowie die Datenleitungen 1N zählen, gerichtete Verstärker vorgesehen. Die Zeitmultiplexrahmen laufen mit dem Bittakt über den Bus und dem Rahmentakt ist jeweils getrennt für Sende- und Empfangsrichtung der Zeitpunkt des Zeitkanals 0 zu entnehmen. Auf den Leitungen 4 zur Signalisierung werden Vermittlungswünsche von den Teilnehmerendeinrichtungen 2 der zentralen Steuereinrichtung 3 gemeldet und von dieser wird die Verbindung durch Zuteilung freier Zeitkanäle hergestellt. Neben der Abfrage der Einrichtungen 1 nach Verbindungswünschen der Teilnehmerendeinrichtungen 2 wird in der zentralen Steuereinrichtung 3 das Protokoll zur Signalisierung auf den Leitungen 4 ausgewertet. Weitere Funktionen der zentralen Steuereinrichtung 3 sind die Speicherung von zentralen Anlagendaten der Nebenstellenanlage, die Verwaltung von freien Zeitkanälen, das Führen von Statistiken, die Überwachung jeder Leitung des Buses und Zusatzeinrichtungen zur Erzeugung von Wahltönen, Aus-

wertung von Multifrequenz-Wahl der Teilnehmerendeinrichtung 2 und Bildung von Konferenzen zwischen den Teilnehmerendeinrichtungen 2.

Der Ausfall einer der acht Datenleitungen 1N der Empfangsrichtung und der Senderichtung kann somit von der zentralen Empfangsrichtung 3 erkannt werden. Die zentrale Steuereinrichtung 3 teilt für Verbindungen keine Zeitkanäle der gestörten Leitung zu. Der Verbindungsaufbau und der Verkehr zwischen den Teilnehmerendeinrichtungen 2 wird über die restlichen Datenleitungen 1N der Empfangsrichtung und der Senderichtung durchgeführt. Um die Funktionssicherheit der Nebenstellenanlage zu erhöhen, können die zentrale Steuereinrichtung 3 und die Leitungen 4 zur Signalisierung gedoppelt werden.

## Patentansprüche

1. Zentralgesteuerte Fernmelde-, insbesondere Nebenstellenanlage, mit einer Vielzahl von Teilnehmerendeinrichtungen (2) und mit gerichteten Datenanleitungen (1N), an welche alle Teilnehmerendeinrichtungen (2) parallel angeschlossen sind und über welche Datenblöcke seriell übertragen werden, dadurch gekennzeichnet, dass eine Vielzahl von parallel geführten, gerichteten Datenleitungen (1N), auf welche jede Teilnehmerendeinrichtung (2) zugreifen kann, und weitere gerichteten Leitungen (4), z.B. zur Übertragung von Bittakt, Rahmentakt und Signalisierung vorgesehen sind, dass die gerichteten Datenleitungen (1N) paarweise zu einer Schleife verbunden sind und dass beim Ausfall einer der Datenleitungen der Übertragungsstrecke von der zentralen Steuereinrichtung (3) der Datenstrom der gestörten Datenleitung (1N) auf die parallel geführten und ungestörten Datenleitungen (1N) verteilt und in deren freien Zeitkanälen übertragen wird.

2. Nebenstellenanlage nach Anspruch 1, dadurch gekennzeichnet, dass die zentrale Steuereinrichtung (3) über mindestens je eine gerichtete Leitung (4) einen Bittakt und einen Rahmentakt zur Teilnehmerendeinrichtung (2) überträgt.

3. Nebenstellenanlage nach Anspruch 1, dadurch gekennzeichnet, dass die zentrale Steuereinrichtung (3) die geschlossene Schleife der Datenleitung (1N) zwischen den Teilnehmerendeinrichtungen (2) überwacht.

4. Nebenstellenanlage nach Anspruch 1 bis 3, dadurch gekennzeichnet, dass die Zeitschlitzvergabe durch die zentrale Steuereinrichtung (3) erfolgt und über Signalisierungskanäle den Teilnehmerendeinrichtungen (2) mitgeteilt wird.

5. Nebenstellenanlage nach Anspruch 4, dadurch gekennzeichnet, dass die Zeitschlitzvergabe durch Austausch von Signalisierungsinformation über Signalisierungskanäle zwischen den Teilnehmerendeinrichtungen (2) erfolgt.

6. Nebenstellenanlage nach Anspruch 4, dadurch gekennzeichnet, dass die Signalisierungskanäle innerhalb eines Multiplexrahmens der Datenleitungen (1N) oder über zusätzliche, gerichtete Leitungen geführt werden.

## Claims

1. A centrally controlled telephone exchange, more specifically a private branch exchange comprising a plurality of subscriber terminal stations (2) and directional data lines (1N), to which all the subscriber terminal stations (2) are connected in parallel and via which data blocks are serially transmitted, characterized in that a plurality of parallel-arranged, directional data lines (1N), to which each subscriber station (2) has access, and further directional control lines (4), for example for the transmission of bit clock pulses, frame clock pulses and signalling information are provided, that the pairs of directional data lines (1N) are connected so as to form a loop, and that in the event of failure of one of the data lines of the transmission paths the central control circuit (3) distributes the data stream of the failed data line (1N) over the parallel, non-disturbed data lines (1N) and transmits in their free time slots.

2. A private branch exchange as claimed in Claim 1, characterized in that the central control circuit (3) transmits a bit clock pulse and a frame clock pulse to the subscriber station (2) via at least always one directional line (4).

3. A private branch exchange as claimed in Claim 1, characterized in that the central control circuit (3) supervises the closed loop of the data line (1N) among the subscriber stations (2).

4. A private branch exchange as claimed in Claims 1 to 3, characterized in that the time slot allocation is effected by the central control circuit (3) and is reported via signalling channels to the subscriber stations (2).

5. A private branch exchange as claimed in Claim 4, characterized in that the time slot allocation is effected by exchanging signalling information via signalling channels among the subscriber stations (2).

6. A private branch exchange as claimed in Claim 4, characterized in that the signalling channels are conveyed within a multiplex frame of data lines (1N) or via additional, directional lines.

## Revendications

1. Installation de télécommunication à commande centrale, en particulier standard privé, comportant un grand nombre de terminaux d'abonnés 2 et des lignes de données dirigées (1N) auxquelles tous les terminaux d'abonnés (2) sont connectés en parallèle et par l'intermédiaire desquelles des blocs de données sont transmis en série, caractérisée en ce que sont prévues plusieurs lignes de données dirigées parallèles (1N) auxquelles chaque terminal d'abonné (2) a accès, de même que d'autres lignes dirigées (4), par exemple pour la transmission du signal d'horloge de bit, du signal d'horloge de séquences et de la signalisation, que les lignes de données dirigées (1N) sont connectées par paires en une boucle et qu'en cas de défaillance d'une des lignes de données du trajet de transmission, le flux de données de la ligne de données dérangée (1N) est réparti par le dispositif de commande centrale (3) sur les lignes de données parallèles et non dérangées (1N) et est transmis dans leurs canaux de temps libres.

2. Standard privé suivant la revendication 1, caractérisé en ce que le dispositif de commande centrale (3) transmet, par l'intermédiaire chaque fois d'au moins une ligne dirigée (4), un signal d'horloge de bits et un signal d'horloge de séquences au terminal d'abonné (2).

3. Standard privé suivant la revendication 1, caractérisé en ce que le dispositif de commande centrale (3) surveille la boucle fermée de la ligne de données (1N) entre les terminaux d'abonnés (2).

4. Standard privé suivant les revendications 1 à 3, caractérisé en ce que la prédéfinition des tranches de temps est effectuée par le dispositif de commande centrale (3) et est communiquée par l'intermédiare de canaux de signalisation aux terminaux d'abonnés (2).

5. Standard privé suivant la revendication 4, caractérisé en ce que la prédéfinition des tranches de temps est effectuée par échange d'information de signalisation par l'intermédiaire de canaux de signalisation entre les terminaux d'abonnés (2).

6. Standard privé suivant la revendication 4, caractérisé en ce que les canaux de signalisation sont conduits à l'intérieur d'une séquence multiplex aux lignes de données (1N) ou par l'intermédiaire de lignes dirigées supplémentaires.

0 110 464

Z St

J/O  J/O  J/O  J/O  J/O  J/O  J/O  J/O

2  2  2  2

2

2  2  2a

1N 4 1 5 6

3 7